# FASCICULE DE BREVET EUROPEEN

(11) **EP 3 341 267 B1**
(45) Date de publication et mention de la délivrance du brevet: **18.09.2019**
(21) Numéro de dépôt: 16757303.9
(22) Date de dépôt: 27.07.2016
(51) Int. Cl.: B62D 25/00, B62D 29/00

(54) **PIÈCE DE RENFORT À STRUCTURE ALVÉOLAIRE POUR VÉHICULE AUTOMOBILE**
VERSTEIFUNGSTEIL MIT EINER ZELLSTRUKTUR FÜR EIN KRAFTFAHRZEUG
REINFORCING PART WITH A CELLULAR STRUCTURE FOR A MOTOR VEHICLE

(30) Priorité: 27.08.2015 FR 1557981
(43) Date de publication de la demande: 04.07.2018
(73) Titulaire: RENAULT s.a.s., 92100 Boulogne-Billancourt (FR)
(72) Inventeur: BEZEAULT, Loïc, 78150 Le Chesnay (FR); FAVREAU, Christophe, 78530 Buc (FR); DUHEM, Xavier, 92130 Issy Les Moulineaux (FR)
(86) Numéro de dépôt international: PCT/FR2016/051947
(87) Numéro de publication internationale: WO 2017/032935

(56) Documents cités:
- DE-A1-102012 112 286
- FR-A1- 3 009 708
- US-A- 5 746 419
- US-A1- 2012 112 479
- US-A1- 2014 203 592

## Description

### Domaine technique de l'invention

L'invention concerne le domaine de l'automobile, et plus particulièrement des pièces de renfort.

L'invention a pour objet plus particulièrement une pièce de renfort pour véhicule automobile.

### État de la technique

Il existe un besoin d'alléger l'ensemble de la caisse d'un véhicule automobile pour une meilleure consommation, ou une meilleure longévité des batteries, dudit véhicule automobile.

Plus un véhicule est léger, plus il est possible de réduire la consommation d'un groupe moto-propulseur thermique ou d'augmenter l'autonomie de la batterie dans une version d'un groupe moto-propulseur électrique.

Cette démarche d'allègement des véhicules automobiles peut permettre de réduire la taille des moteurs, la taille des batteries à iso volume d'architecture voire une réduction de ce volume.

La caisse standard d'un véhicule est complexe par le nombre important de pièces en tôle et des liaisons de contacts et d'assemblage.

Les solutions actuelles ne permettent pas de réduire au maximum la masse du véhicule, et restent dans le monde des matériaux métalliques. L'assemblage des nombreuses pièces métalliques complexifie l'assemblage associé : par soudage, rivetage ou clinchage.

La caisse d'un véhicule est soumise à des tenues mécaniques et acoustiques telles que la raideur globale, la raideur en torsion, un 1^{er} mode propre (fréquence modale).

Cette même caisse peut être soumise en cas d'accident à un choc latéral, un choc arrière, au retournement, et à des tenues sous contraintes (exemple des sièges et des ancrages ceintures).

Pour répondre aux contraintes du domaine des véhicules automobiles, il faut une caisse solide avec des zones plus raides et des zones renforcées localement, comme cela est décrit dans US2014/203592-A1.

Il existe donc un besoin de former de nouvelles pièces de renfort permettant d'une part d'alléger le véhicule automobile, et d'autre part d'assurer les fonctions de renfort et/ou d'assemblage d'organes à la caisse du véhicule automobile.

### Objet de l'invention

Le but de la présente invention est de proposer une solution qui remédie à tout ou partie des inconvénients listés ci-dessus.

On tend vers ce but notamment grâce à une pièce de renfort pour véhicule automobile comprenant un support métallique et en ce qu'elle comporte une structure alvéolaire, notamment en nid d'abeille, formée par un matériau composite et assemblée au support métallique, le support métallique comporte des éléments d'assemblage d'au moins un organe, les éléments d'assemblage sont configurés de sorte à autoriser le montage d'une traverse de planche de bord du véhicule automobile et/ou d'une charnière de porte latérale du véhicule automobile.

Avantageusement, le matériau composite comporte une matrice en résine, notamment thermodurcissable ou thermoplastique, et des fibres, notamment des fibres de verre ou des fibres de carbone.

Selon une réalisation, la structure alvéolaire comporte deux ensembles d'alvéoles s'étendant à partir d'une base commune dans des directions opposées.

Par exemple, la structure alvéolaire est conformée de sorte à définir au moins deux zones de rigidité différente.

Selon une mise en oeuvre, le support métallique est conformé de sorte à épouser des parties de faces distinctes de la structure alvéolaire.

L'invention est aussi relative à un véhicule automobile comportant au moins une pièce de renfort telle que décrite.

Notamment, ladite au moins une pièce de renfort est montée audit véhicule automobile de sorte à former un renfort de pied avant ou de pied milieu du véhicule automobile.

Selon une réalisation, le véhicule automobile comporte un pied avant, un pied milieu, une porte latérale avant articulée sur le pied avant, une porte latérale arrière articulée sur le pied milieu et une traverse de planche de bord, ledit pied avant étant muni :
- d'une première pièce de renfort telle que décrite, une charnière supérieure de la porte latérale avant du véhicule automobile étant montée sur le support métallique de la première pièce de renfort et la traverse de planche de bord étant montée sur le support métallique de la première pièce de renfort,
- d'une deuxième pièce de renfort telle que décrite, une charnière inférieure de la porte latérale avant du véhicule automobile étant montée sur le support métallique de la deuxième pièce de renfort,
et le pied milieu étant muni :
- d'une troisième pièce de renfort telle que décrite, une charnière supérieure de la porte latérale arrière du véhicule automobile étant montée sur le support métallique de la troisième pièce de renfort,
- d'une quatrième pièce de renfort telle que décrite, une charnière inférieure de la porte latérale arrière du véhicule automobile étant montée sur le support métallique de la quatrième pièce de renfort.

L'invention est aussi relative à un procédé d'assemblage d'une partie d'un véhicule automobile, caractérisé en ce qu'il comprend les étapes suivantes :
- une fourniture d'une pièce de renfort telle que décrite,
- une formation d'un élément structurel du véhicule automobile comprenant ladite pièce de renfort fournie, notamment ledit élément structurel formé est un pied avant ou milieu du véhicule automobile.

Notamment, l'étape de formation de l'élément structurel comporte la fourniture d'un côté de caisse et la fourniture d'une doublure de côté de caisse, ladite pièce de renfort fournie étant d'abord assemblée à la doublure de côté de caisse, puis le côté de caisse est monté sur l'ensemble formé par l'assemblage de la pièce de renfort à la doublure de côté de caisse.

L'invention est aussi relative à un procédé de fabrication d'une pièce de renfort telle que décrite, caractérisé en ce qu'il comporte une étape de formation de la structure alvéolaire dans un moule, une étape de placement du support métallique dans le moule avant la formation de la structure alvéolaire ou une étape de collage du support métallique sur la structure alvéolaire après sa formation et son démoulage du moule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 représentent un premier type de pièce de renfort vue sous deux perspectives différentes,
- les figures 3 et 4 représentent un deuxième type de pièce de renfort vue sous deux perspectives différentes,
- la figure 5 illustre une partie latérale de caisse de véhicule automobile équipée de pièces de renfort,
- la figure 6 illustre un plan de coupe de la figure 1 passant par la ligne de coupe C1 et parallèle au plan XY,
- la figure 7 illustre un plan de coupe de la figure 1 passant par la ligne de coupe C2 et parallèle au plan XY,
- la figure 8 illustre un plan de coupe de la figure 3 passant par la ligne de coupe C3 et parallèle au plan XY,
- la figure 9 illustre une variante de la figure 6 intégrant une feuillure d'étanchéité.

### Description de modes préférentiels de l'invention

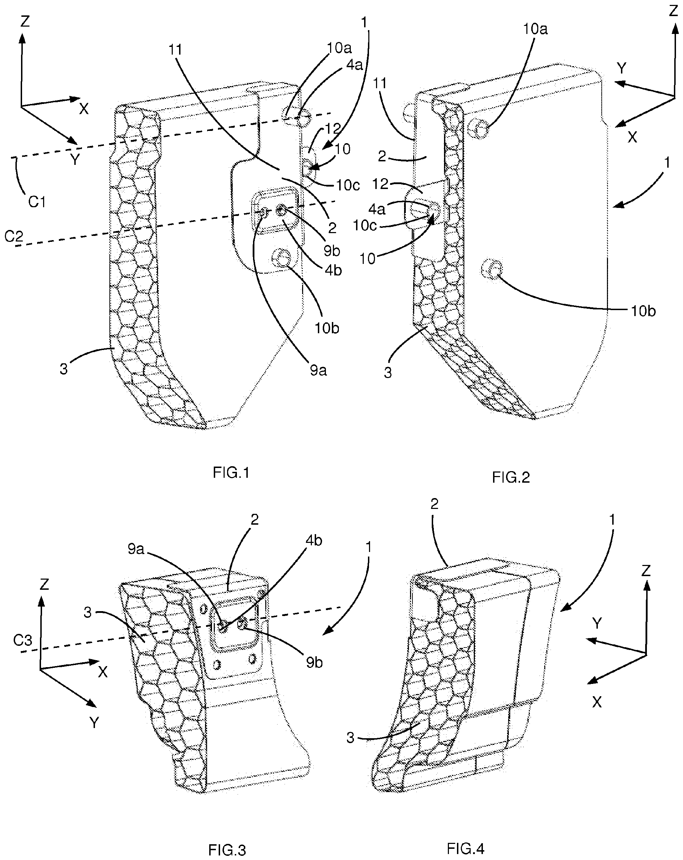

Aux figures 1 à 9, il est représenté un repère orthonormé XYZ. Ce repère correspond au référentiel du véhicule automobile lorsque ce dernier repose sur le sol, et pour lequel X est orienté vers l'arrière du véhicule automobile et sensiblement parallèle à un axe longitudinal du véhicule automobile, Y est orienté vers un côté latéral du véhicule et sensiblement parallèle à un axe latéral du véhicule, et Z est orienté vers le haut et sensiblement parallèle à un axe vertical du véhicule. En ce sens, aux figures 1 à 9, le repère XYZ permet d'illustrer un agencement préféré de ce qui est représenté auxdites figures lorsque ce qui est représenté est monté audit véhicule automobile.

La présente invention propose un nouveau type de pièce de renfort pour véhicule automobile, notamment une pièce de renfort pour pied avant ou pied milieu ou arrière du véhicule automobile.

Comme illustré en figures 1 à 4, la pièce de renfort 1 pour véhicule automobile comprend un support métallique 2 et une structure alvéolaire 3, notamment en nid d'abeille, formée par un matériau composite et assemblée au support métallique 2.

Bien que la structure alvéolaire 3 en nid d'abeille soit préférée, la section des alvéoles de la structure alvéolaire 3 dans un plan de coupe sensiblement perpendiculaire à la direction d'extension des alvéoles peut être choisie parmi : un hexagone, un pentagone, un octogone, etc.

Cette pièce de renfort 1 comporte une configuration avant assemblage au reste du véhicule où elle se comporte comme une pièce monobloc. Autrement dit, l'assemblage de la structure alvéolaire 3 au support métallique 2 est tel que tout déplacement de la structure alvéolaire 3 impose le même déplacement au support métallique 2.

La structure alvéolaire 3 permet de réaliser une fonction d'absorption d'énergie et de présenter une raideur locale adaptée à la destination d'utilisation de la pièce de renfort 1.

Le support métallique 2 peut avantageusement comporter des éléments d'assemblage 4a, 4b d'au moins un organe. En fait, on comprend ici que le support métallique 2, outre sa fonction d'apport de raideur à la pièce de renfort 1, permet d'utiliser cette raideur pour assembler/fixer des organes telles qu'une charnière de porte ou une traverse de planche de bord. Autrement dit, les éléments d'assemblage 4a, 4b peuvent être configurés de sorte à autoriser le montage d'une traverse de planche de bord du véhicule automobile (élément 4a) et/ou d'une charnière de porte latérale du véhicule automobile (élément 4b).

Les éléments d'assemblage peuvent être choisis parmi des inserts, des écrous ou vis pouvant être sertis, soudés ou collés à une partie correspondante du support métallique 2.

Sur les figures 1 et 2, la pièce de renfort 1 comporte des éléments d'assemblage 4a pour assembler une traverse de planche de bord du véhicule automobile et des éléments d'assemblage 4b pour fixer une charnière supérieure de porte latérale du véhicule automobile.

Sur les figures 3 et 4, la pièce de renfort comporte seulement des éléments d'assemblage 4b pour fixer une charnière inférieure de porte latérale si cette pièce de renfort 1 est utilisée en complément de celle des figures 1 et 2 pour le montage de la même porte latérale avant du véhicule automobile. Alternativement, cette pièce de renfort peut être utilisée deux fois pour monter les charnières inférieure et supérieure d'une porte latérale arrière du véhicule automobile.

On comprend alors que l'invention est aussi relative à un véhicule automobile comportant au moins une pièce de renfort 1 telle que décrite dans la présente description.

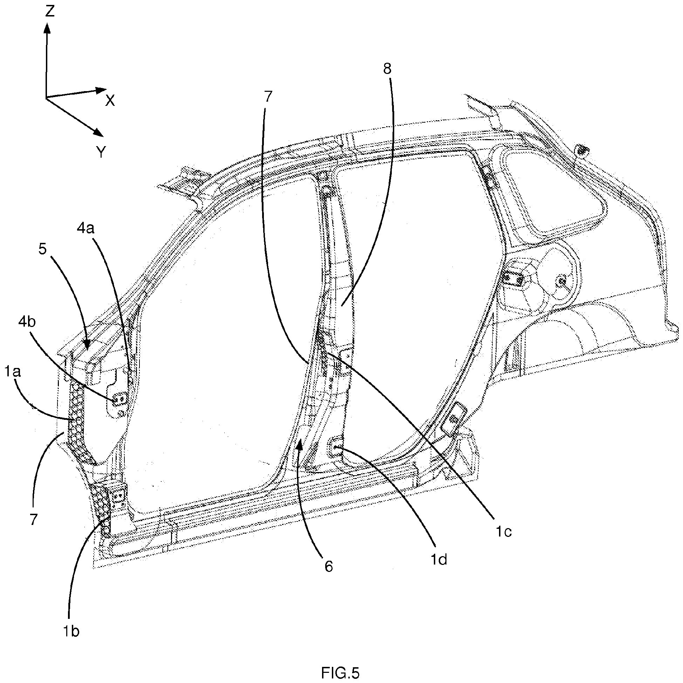

En particulier, comme l'illustre la figure 5, ladite au moins une pièce de renfort 1a, 1b, 1c, 1d est montée audit véhicule automobile de sorte à former un renfort de pied avant 5 (pièces de renfort 1a, 1b) ou de pied milieu ou arrière 6 (pièces de renfort 1c, 1d) du véhicule automobile.

Dans la présente description, un pied avant 5 correspond à un élément sur lequel est articulée une porte latérale avant du véhicule automobile, et un pied milieu 6 correspond à un élément sur lequel est articulée une porte latérale arrière du véhicule automobile.

Dans l'exemple de la figure 5, les pièces de renfort 1a, 1b, 1c, 1d sont destinées à être montées entre un côté de caisse 8 et une doublure de côté de caisse 7. La doublure de côté de caisse 7 correspond à une pièce structurelle disposée du côté intérieur du véhicule automobile, et le côté de caisse 8 correspond à un panneau de carrosserie rendu visible depuis l'extérieur du véhicule compte tenu de sa disposition au niveau du côté extérieur du véhicule automobile.

Toujours sur l'exemple de la figure 5, le pied avant 5 comporte deux pièces de renfort 1a, 1b. La pièce de renfort 1a est du type de celle des figures 1 et 2, c'est à dire qu'elle comporte les éléments 4a, 4b nécessaires au montage d'une traverse de planche de bord et d'une charnière supérieure de porte latérale avant du véhicule automobile. La pièce de renfort 1b est du type de celle des figures 3 et 4 et comporte les éléments nécessaires à la fixation d'une charnière inférieure de la porte latérale avant du véhicule automobile. Quant à lui, le pied milieu 6 comporte aussi deux pièces de renfort 1c, 1d munies respectivement d'éléments nécessaires à la fixation d'une charnière supérieure et d'une charnière inférieure d'une porte latérale arrière du véhicule automobile.

Autrement dit, le véhicule automobile peut comporter le pied avant 5, un pied milieu 6, une porte latérale avant articulée sur le pied avant 5 (non représentée), une porte latérale arrière articulée sur le pied milieu 6 (non représentée) et une traverse de planche de bord (non représentée). Dans ce cas, ledit pied avant 5 est muni : d'une première pièce de renfort 1a telle que décrite, une charnière supérieure de la porte latérale avant du véhicule automobile étant montée sur le support métallique de la première pièce de renfort 1a et la traverse de planche de bord étant montée sur le support métallique de la première pièce de renfort 1a ; et d'une deuxième pièce de renfort 1b telle que décrite, une charnière inférieure de la porte latérale avant du véhicule automobile étant montée sur le support métallique de la deuxième pièce de renfort 1b. Par ailleurs, le pied milieu 6 est muni : d'une troisième pièce de renfort 1c telle que décrite, une charnière supérieure de la porte latérale arrière du véhicule automobile étant montée sur le support métallique de la troisième pièce de renfort 1c ; et d'une quatrième pièce de renfort 1d telle que décrite, une charnière inférieure de la porte latérale arrière du véhicule automobile étant montée sur le support métallique de la quatrième pièce de renfort 1d.

Sur la figure 5, le côté de caisse 8 au niveau du pied avant 5 a été retiré pour visualiser les pièces de renfort 1a et 1b, alors que le côté de caisse 8 au niveau du pied milieu 6 est bien visible.

Le côté de caisse 8 peut être formé par plusieurs éléments distincts.

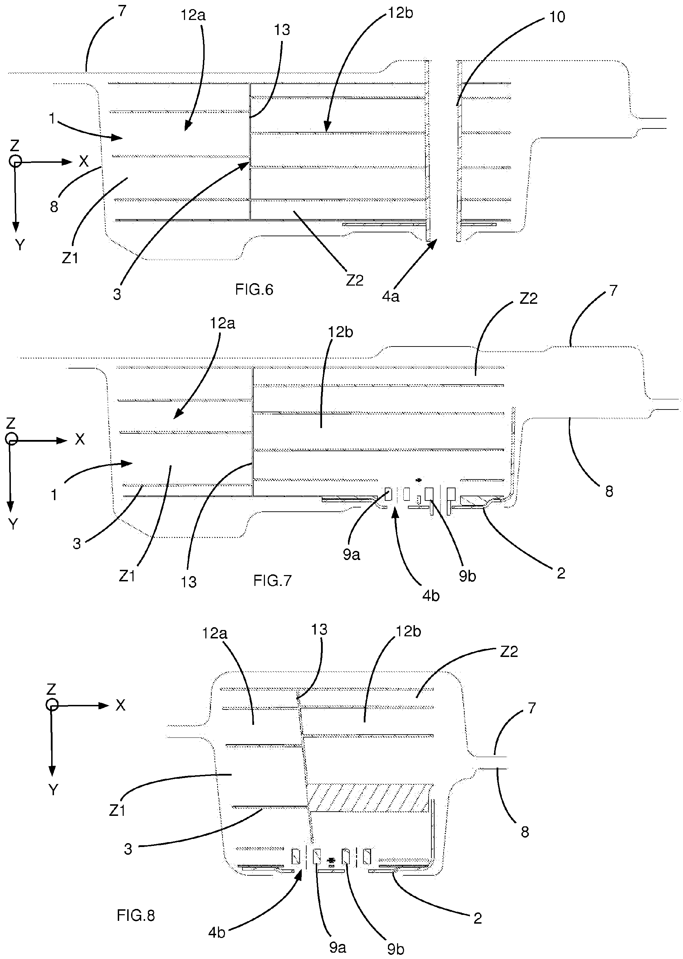

La figure 6 illustre une vue en coupe selon la ligne C1 lorsque la pièce de renfort 1 de la figure 1 est installée au véhicule automobile, c'est-à-dire montée entre le côté de caisse 8 et la doublure de côté de caisse 7.

La figure 7 illustre une vue en coupe selon la ligne C2 lorsque la pièce de renfort 1 de la figure 1 est installée au véhicule automobile, c'est-à-dire montée entre le côté de caisse 8 et la doublure de côté de caisse 7.

La figure 8 illustre une vue en coupe selon la ligne C3 lorsque la pièce de renfort 1 de la figure 3 est installée au véhicule automobile, c'est-à-dire montée entre le côté de caisse 8 et la doublure de côté de caisse 7.

En particulier, pour autoriser la fixation d'une charnière de porte les éléments d'assemblage 4b visibles aux figures 1, 3, 7 et 8 peuvent comporter deux écrous (ou vis) 9a, 9b fixés sur une partie correspondante du support métallique 2. La fixation des écrous (ou vis) 9a, 9b peut être réalisée par soudage ou par sertissage. Préférentiellement, l'élément d'assemblage 4b est de type écrou dont la partie comprenant un taraudage s'étend d'une face intérieure du support métallique 2 vers l'intérieur de la structure alvéolaire 3.

Avantageusement, pour autoriser la fixation d'une traverse de planche de bord, les éléments d'assemblage 4a (visibles aux figures 1, 2 et 6) comportent des fûts 10 autorisant le passage d'un élément allongé participant au montage de la traverse de planche de bord.

Sur les figures 1 et 2, les fûts 10 sont au nombre de trois, des premier et deuxième fûts 10a, 10b traversent une première partie 11 du support métallique 2 ainsi que la structure alvéolaire 3 et un troisième fût 10c traverse une deuxième partie 12 du support métallique 2 formant une aile latérale dudit support métallique 2 qui n'est pas en contact avec la structure alvéolaire 3. Les première et deuxième parties 11, 12 du support métallique 2 sont préférentiellement incluses dans des plans distincts mais sensiblement parallèles entre eux.

De manière préférée, le support métallique 2 comporte au moins trois faces distinctes chacune en contact avec une face correspondante de la structure alvéolaire 3, et préférentiellement l'aile latérale de la deuxième partie 12 s'étend depuis l'une des faces du support métallique 2 en contact avec la structure alvéolaire 3. Ceci permet d'assurer un maintien adéquat du support métallique 2 à la structure alvéolaire 3.

De manière plus générale, le support métallique 2 peut être conformé afin d'épouser des parties de faces distinctes de la structure alvéolaire 3. Ceci permet d'avoir un respect géométrique d'assemblage du support 2 sur la structure 3 en passant par au moins deux faces d'appui, ici trois faces d'appui (le maximum préféré). Le support métallique 2 ainsi conformé a une meilleure tenue structurelle propre (cares de coins, bords tombés).

Les figures 6 à 8 montrent des vues en coupes selon le plan XY lorsque la pièce de renfort 1 est installée dans le véhicule automobile. Sur ces figures, on peut voir que la structure alvéolaire 3 comporte deux ensembles d'alvéoles 12a, 12b s'étendant à partir d'une base commune 13 dans des directions opposées. Les ensembles alvéolaires peuvent être de conceptions différentes permettant de répondre à des contraintes de déformation différentes. Par l'implantation de la pièce de renfort sensiblement au prolongement d'une doublure d'aile par laquelle transitent les efforts d'un choc du véhicule contre un obstacle, la partie avant de la pièce de renfort est destinée à absorber une partie de l'énergie du choc afin d'éviter à cette dernière de transiter par la partie du renfort sur lequel est fixé le support métallique formant une interface de fixation pour une charnière de porte.

Selon une mise en oeuvre, la structure alvéolaire 3 peut être conformée pour définir au moins deux zones Z1, Z2 de rigidité différente. Ces différentes rigidités peuvent permettre de définir au sein de la structure alvéolaire 3 une zone de déformation privilégiée et une zone rigide présentant une rigidité supérieure à la zone de déformation privilégiée. De préférence, la zone rigide jouxte la zone de déformation privilégiée le long d'un axe sensiblement parallèle à l'axe d'extension des alvéoles de la structure alvéolaire 3. En fait, ces deux zones peuvent être distinguées par les sections des alvéoles, dans la zone de déformation privilégiée, les alvéoles ont des sections de dimensions supérieures aux dimensions des sections des alvéoles situées dans la zone rigide.

Selon une mise en oeuvre particulière, la zone de déformation privilégiée Z1 est une zone avant de la pièce de renfort et la zone rigide Z2 est une zone arrière de la pièce de renfort. Ces deux zones peuvent notamment s'étendre de part et d'autre de la base commune 13 évoquée précédemment. La zone avant de la pièce de renfort est la zone la plus proche de l'avant du véhicule et la zone arrière de la pièce de renfort est la zone la plus proche de l'arrière du véhicule automobile, lorsque la pièce de renfort est assemblée au véhicule automobile. Ceci est notamment le cas dans le cadre de la pièce de renfort du type des figures 1 et 2 qui s'étend dans un chemin de transfert d'effort en cas de choc frontal du véhicule contre un obstacle. Dès lors, le support métallique est préférentiellement fixé au niveau de la zone arrière de la pièce de renfort de telle sorte que la zone avant puisse se déformer en cas de choc frontal au véhicule sans modifier la géométrie de la zone arrière sur laquelle est montée la porte.

Le matériau composite pris en base pour la structure alvéolaire peut être constitué par :
- une matrice ou une résine de type polyamide
- des fibres courtes en fibre de verre : on parle alors de chargement, la base peut être une charge de 30% de fibre de verre dans le composite.

Autrement dit, le matériau composite peut comporter une matrice en résine (par exemple une matière plastique), notamment thermodurcissable ou thermoplastique, et des fibres, notamment des fibres de verre ou des fibres de carbone.

L'invention est aussi relative à un procédé de fabrication d'une pièce de renfort 1 telle que décrite. Préférentiellement, un tel procédé de fabrication comporte une étape de formation de la structure alvéolaire 3 dans un moule. De préférence, le procédé comporte une étape de placement du support métallique 2 dans le moule avant la formation de la structure alvéolaire 3, ou une étape de collage du support métallique 2 sur la structure alvéolaire 3 après sa formation et son démoulage du moule.

On comprend alors que le procédé de fabrication peut utiliser les techniques de l'injection. Une fois la résine injectée dans le moule avec les fibres, il suffit d'attendre que cette dernière polymérise.

L'invention est aussi relative à un procédé d'assemblage d'une partie d'un véhicule automobile. Un tel procédé d'assemblage peut comporter une étape de fourniture d'une pièce de renfort 1 telle que décrite et une étape de formation d'un élément structurel du véhicule automobile comprenant ladite pièce de renfort fournie, notamment ledit élément structurel formé est un pied avant 5 ou milieu 6 du véhicule automobile.

En particulier, l'étape de formation de l'élément structurel comporte la fourniture d'un côté de caisse 8 et la fourniture d'une doublure 7 de côté de caisse, ladite pièce de renfort 1 fournie étant d'abord assemblée à la doublure de côté de caisse 7, puis le côté de caisse 8 est monté sur l'ensemble formé par l'assemblage de la pièce de renfort 1 à la doublure côté de caisse 7.

Chaque pièce de renfort 1, 1a, 1b, 1c, 1d assemblée à la caisse (côté de caisse plus doublure de côté de caisse) peut l'être par collage. Le principe de collage entre matériau composite et pièces métalliques est connu et ne sera pas décrit ici en détails.

Ainsi, la pièce de renfort peut être collée au côté de caisse 8 et/ou à la doublure de côté de caisse 7.

La colle utilisée peut être différente en fonction des matériaux à assembler, du temps de fabrication à respecter et des contraintes mécaniques résultantes.

Afin de réaliser l'assemblage du montant, il peut être utilisé une colle à bi-composant et à base de polyuréthane. Les colles polyuréthane sont basées sur la chimie des Polyisocyanates et Polyéther / Polyols polyesteriques. Elles existent en structure mono ou bi-composants. Les colles monocomposant réagissent à l'humidité de l'air et peuvent être appliquées à température ambiante ou à température élevée comme pour les colles thermoplastiques. Les colles bi-composants doivent être mélangées selon des proportions précises avant utilisation. Des traitements de surfaces sont possibles et voire nécessaires dans certains cas : Primaire à déposer, opération dite « plasma » ou « corona ».

La colle peut venir fixer la pièce de renfort au côté de caisse 8 et à la doublure 7 de côté de caisse. Autrement dit, un ou plusieurs filets de colle peuvent venir coller la pièce de renfort à la doublure de côté de caisse et/ou au côté de caisse.

Le côté de caisse 8 ou la doublure de côté de caisse 7, voire les deux, peut être en matériau composite dans le but de réduire le poids du véhicule automobile. Il est aussi possible que le côté de caisse 8 soit en métal et que la doublure de côté de caisse 7 soit en matériau composite, ou inversement.

En termes d'étape d'assemblage du véhicule automobile muni d'une pièce de renfort 1 telle que décrite, il est possible de suivre la même ligne qu'une caisse assemblée en tôle : il s'agit d'utiliser une ligne de pré-assemblage et une ligne d'assemblage générale. La ligne de pré-assemblage permet de former différentes unités de la caisse en utilisant un processus d'assemblage des différentes unités de la caisse du véhicule automobile sur une ligne en mouvement.

Dans le cadre de la pièce de renfort, nous sommes centrés sur la ligne de pré-assemblage de l'ensemble formé par le côté de caisse 8, les pièces de renfort 1 et la doublure 7 de côté de caisse, un tel ensemble formant l'unité susmentionnée. Les étapes initiales sont les suivantes (postes de pré-assemblage) :
- pré-assemblage de la doublure 7 de côté de caisse et des pièces de renfort 1a, 1b au niveau du pied avant 5,
- pré-assemblage de la doublure 7 de côté de caisse et des pièces de renfort 1c, 1d du pied milieu 6,
- Pré-assemblage de l'unité avec le côté de caisse 8.

Au final, nous obtenons une unité gauche, ou droite, complète pour lesquelles les pièces de renfort 1a, 1b, 1c, 1d sont prises en sandwich entre le côté de caisse 8 correspondant et la doublure 7 de côté de caisse correspondante.

Durant les différentes étapes, les zones de collages sont définies, et la cinématique de collage est définie dans le but d'éviter des contacts ou raclage des zones encollées.

La quantité de colle est définie en fonction des tenues mécaniques demandés et de la raideur de caisse voulue.

Les jeux de collage (entrefer entre pièces) sont définis comme tels :
- jeu de 1 mm entre deux pièces d'une même unité,
- jeu de 2 mm entre deux unités, ce dernier jeu permettant de rattraper des défauts géométriques entre unités.
Bien entendu, ces valeurs sont données à titre exemplatif et sont à affiner en fonction de retours géométriques en sortie de fabrication et d'assemblage.

Afin de faciliter les différentes étapes d'assemblage, il est possible d'y intégrer des fonctions de pilotes ou des fixations de pré-maintien : la réticulation de la colle doit se faire le plus rapidement possible et en accord avec la cadence de fabrication. Les fixations de pré-maintien sont adéquates pour permettre une réticulation à plus long terme sans fausser la géométrie de l'ensemble.

Selon une réalisation particulière, l'étape de formation de l'élément structurel évoquée précédemment utilisant de la colle, il est réalisé une étape de chauffe pour d'accélérer le processus de réticulation de la colle et pour figer une géométrie de caisse. A titre d'exemple, la température de chauffe utilisée lors de l'étape de chauffe peut être de 80° C pendant 20 min. De préférence, cette étape de chauffe est réalisée après avoir encollé les différentes pièces de renfort 1a, 1b, 1c, 1d à une doublure 7 de côté de caisse correspondante et au côté de caisse 8 correspondant.

Les matériaux composites utilisés pour la doublure 7 de caisse, le côté de caisse 8 ou la pièce de renfort peuvent être constitués d'un tissage en carbone afin de former des matériaux de haute performance dépassant les caractéristiques mécaniques des meilleurs aciers à très hautes limites élastiques, leur utilisation est donc possible et avantageuse dans le cadre d'une caisse de véhicule composite. L'utilisation de composites est un élément majeur pour l'allègement : la pièce de renfort décrite précédemment intègre une partie de pièces métalliques et renforce la tenue des prestations. Comme évoqué précédemment, les formes alvéolaires participent à la tenue mécanique : absorption d'énergie et grande tenue en flexion suivant les formes et les épaisseurs des alvéoles. Les supports métalliques sont quant à eux utiles pour les interfaces : il faut tenir des prestations de fatigue, vibratoire et acoustiques, et assurer les interfaces avec pièces de montage (traverse de planche de bord, porte latérale, etc.).

L'utilisation de matériaux composites amène à obtenir plus facilement des formes complexes et de dimensions plus grandes tout en réduisant le nombre de pièces à fabriquer et à assembler. En outre, il est aisé de faire varier les épaisseurs d'une même pièce composite afin de répondre au mieux aux prestations.

En fonction des prestations souhaitées, il est possible d'adapter la structure de la pièce de renfort. Ainsi, la matière délimitant la structure alvéolaire peut présenter une épaisseur comprise entre 1,5mm et 4mm, le support métallique peut présenter une épaisseur enter 0,8mm et 2,5mm et les éléments d'assemblage 4a, 4b (inserts, fûts, écrous ou vis) peuvent être sertis, soudés ou collés à une partie du support métallique 2.

Les épaisseurs du support métallique 2 et/ou de la matière délimitant la structure alvéolaire 3 peuvent être variables, elles peuvent augmenter par zone et par pièces, c'est-à-dire être adaptables à la demande.

Par rapport au périmètre de départ selon lequel les renforts de caisse du véhicule sont réalisés en acier, il est possible d'obtenir un gain de plus de 20% pour la masse avec l'utilisation de pièces de renfort alvéolaires en composite. Par ailleurs, avec la présente invention, le nombre de pièces par rapport à une caisse de véhicule en tôle selon l'art antérieur est diminué de l'ordre de 15% tout en intégrant de nouvelles fonctions.

L'utilisation de pièces de renfort telles que décrites pour renforcer un pied avant ou milieu permet de respecter les contraintes de sécurité en cas de chocs, d'assurer une conservation de l'ergonomie utilisateur en conservant des profils de pied avant et milieu compatibles avec les prestations usuelles tout en gagnant en allègement. Les matériaux composites utilisés dans le cadre de la pièce de renfort, et/ou du côté de caisse et/ou de la doublure de côté de caisse permettent d'atteindre ce résultat.

Un avantage supplémentaire dans le cadre de l'utilisation de matériaux composite est qu'il est possible d'obtenir de nouvelles formes complexes difficiles à obtenir jusqu'alors du fait de l'utilisation de la tôle.

En vue de diminuer les coûts de fabrication, un même matériau composite peut être utilisé pour former la pièce de renfort, le côté de caisse et la doublure de côté de caisse. Bien entendu, il est possible aussi d'adapter le matériau composite en fonction des prestations souhaitées de la pièce (pièce de renfort, côté de caisse ou doublure de côté de caisse).

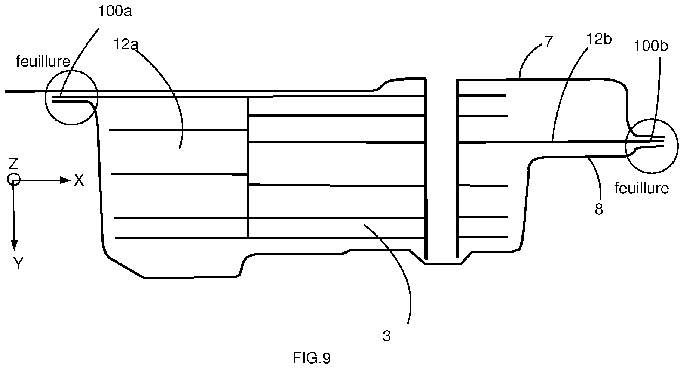

Selon une variante représentée en figure 9, il est aussi possible d'intégrer une feuillure d'étanchéité avec la doublure de côté de caisse 7 et le côté de caisse 8. La structure alvéolée 3 peut comprendre des parois d'extension 100a, 100b longitudinale de direction X qui peuvent être positionnées directement en appui contre des interfaces de liaison (feuillures) appartenant à la doublure de côté de caisse et au côté de caisse.

Le support métallique peut être en tout ou partie recouvert d'une couche de résine de protection pour éviter les problèmes de corrosion, notamment au niveau des éléments d'assemblage qui seront eux aussi préférentiellement recouvert par ladite résine.

## Revendications

1. Pièce de renfort (1) pour véhicule automobile comprenant un support métallique (2), **caractérisée en ce qu'**elle comporte une structure alvéolaire (3), notamment en nid d'abeille, formée par un matériau composite et assemblée au support métallique (2), le support métallique (2) comporte des éléments d'assemblage (4a, 4b) d'au moins un organe, les éléments d'assemblage (4a, 4b) sont configurés de sorte à autoriser le montage d'une traverse de planche de bord du véhicule automobile et/ou d'une charnière de porte latérale du véhicule automobile.

2. Pièce de renfort selon la revendication 1, **caractérisée en ce que** le matériau composite comporte une matrice en résine, notamment thermodurcissable ou thermoplastique, et des fibres, notamment des fibres de verre ou des fibres de carbone.

3. Pièce de renfort selon la revendication 1 ou 2, **caractérisée en ce que** la structure alvéolaire (3) comporte deux ensembles d'alvéoles s'étendant à partir d'une base commune dans des directions opposées.

4. Pièce de renfort selon l'une des revendications 1 à 3, **caractérisée en ce que** la structure alvéolaire (3) est conformée de sorte à définir au moins deux zones de rigidité différente.

5. Pièce de renfort selon l'une quelconque des revendications précédentes, **caractérisée en ce que** le support métallique (2) est conformé de sorte à épouser des parties de faces distinctes de la structure alvéolaire (3).

6. Véhicule automobile, **caractérisé en ce qu'**il comporte au moins une pièce de renfort (1) selon l'une des revendications 1 à 5.

7. Véhicule automobile selon la revendication précédente, **caractérisé en ce que** ladite au moins une pièce de renfort (1) est montée audit véhicule automobile de sorte à former un renfort de pied avant (5) ou de pied milieu (6) du véhicule automobile.

8. Véhicule automobile selon la revendication 6 ou 7, **caractérisé en ce qu'**il comporte un pied avant (5), un pied milieu (6), une porte latérale avant articulée sur le pied avant (5), une porte latérale arrière articulée sur le pied milieu (6) et une traverse de planche de bord, ledit pied avant étant muni :
- d'une première pièce de renfort (1a) selon l'une des revendications 1 à 5, une charnière supérieure de la porte latérale avant du véhicule automobile étant montée sur le support métallique de la première pièce de renfort (1a) et la traverse de planche de bord étant montée sur le support métallique de la première pièce de renfort (1a),
- d'une deuxième pièce de renfort (1b) selon l'une des revendications 1 à 5, une charnière inférieure de la porte latérale avant du véhicule automobile étant montée sur le support métallique de la deuxième pièce de renfort (1b),
et le pied milieu (6) étant muni :
- d'une troisième pièce de renfort (1c) selon l'une des revendications 1 à 5, une charnière supérieure de la porte latérale arrière du véhicule automobile étant montée sur le support métallique de la troisième pièce de renfort (1c),
- d'une quatrième pièce de renfort (1d) selon l'une des revendications 1 à 5, une charnière inférieure de la porte latérale arrière du véhicule automobile étant montée sur le support métallique de la quatrième pièce de renfort (1d).

9. Procédé d'assemblage d'une partie d'un véhicule automobile, **caractérisé en ce qu'**il comprend les étapes suivantes :
- une fourniture d'une pièce de renfort selon l'une quelconque des revendications 1 à 5,
- une formation d'un élément structurel du véhicule automobile comprenant ladite pièce de renfort fournie, ledit élément structurel formé est un pied avant (5) ou milieu (6) du véhicule automobile.

10. Procédé selon la revendication précédente, **caractérisé en ce que** l'étape de formation de l'élément structurel comporte la fourniture d'un côté de caisse (8) et la fourniture d'une doublure de côté de caisse (7), ladite pièce de renfort (1) fournie étant d'abord assemblée à la doublure de côté de caisse (7), puis le côté de caisse (8) est monté sur l'ensemble formé par l'assemblage de la pièce de renfort (1) à la doublure (7) de côté de caisse.

11. Procédé de fabrication d'une pièce de renfort (1) selon l'une quelconque des revendications 1 à 5, **caractérisé en ce qu'**il comporte une étape de formation de la structure alvéolaire (3) dans un moule, une étape de placement du support métallique (2) dans le moule avant la formation de la structure alvéolaire (3) ou une étape de collage du support métallique (2) sur la structure alvéolaire (3) après sa formation et son démoulage du moule.

## Patentansprüche

1. Verstärkungsteil (1) für ein Kraftfahrzeug, umfassend einen Metallträger (2), **dadurch gekennzeichnet, dass** es eine Zellstruktur (3) aufweist, insbesondere in Wabenform, die von einem Verbundmaterial gebildet und an den Metallträger (2) angebracht ist, der Metallträger (2) Elemente zur Anbringung (4a, 4b) mindestens eines Glieds aufweist, die Elemente zur Anbringung (4a, 4b) so ausgebildet sind, dass sie die Montage eines Armaturenbrett-Querträgers des Kraftfahrzeugs und/oder eines Seitentürscharniers des Fahrzeugs gestatten.

2. Verstärkungsteil nach Anspruch 1, **dadurch gekennzeichnet, dass** das Verbundmaterial eine Harzmatrix, die insbesondere wärmehärtbar oder thermoplastisch ist, und Fasern, insbesondere Glas- oder Karbonfasern, aufweist.

3. Verstärkungsteil nach Anspruch 1 oder 2, **dadurch gekennzeichnet, dass** die Zellstruktur (3) zwei Zellanordnungen aufweist, die sich von einer gemeinsamen Basis in entgegengesetzte Richtungen erstrecken.

4. Verstärkungsteil nach einem der Ansprüche 1 bis 3, **dadurch gekennzeichnet, dass** die Zellstruktur (3) so ausgebildet ist, dass sie mindestens zwei Bereiche unterschiedlicher Steifigkeit definiert.

5. Verstärkungsteil nach einem der vorhergehenden Ansprüche, **dadurch gekennzeichnet, dass** der Metallträger (2) so ausgebildet ist, dass er sich an gesonderte Flächenbereiche der Zellstruktur (3) anpasst.

6. Kraftfahrzeug, **dadurch gekennzeichnet, dass** es mindestens ein Verstärkungsteil (1) nach einem der Ansprüche 1 bis 5 aufweist.

7. Kraftfahrzeug nach dem vorhergehenden Anspruch, **dadurch gekennzeichnet, dass** das mindestens eine Verstärkungsteil (1) so an dem Kraftfahrzeug montiert ist, dass es eine Verstärkung einer A-Säule (5) oder B-Säule (6) des Kraftfahrzeugs bildet.

8. Kraftfahrzeug nach Anspruch 6 oder 7, **dadurch gekennzeichnet, dass** es eine A-Säule (5), eine B-Säule (6), eine vordere Seitentür, die an die A-Säule (5) angelenkt ist, eine hintere Seitentür, die an die B-Säule (6) angelenkt ist, und einen Armaturenbrett-Querträger aufweist, wobei die A-Säule mit Folgendem versehen ist:
- einem ersten Verstärkungsteil (1a) nach einem der Ansprüche 1 bis 5, wobei ein oberes Scharnier der vorderen Seitentür des Kraftfahrzeugs an dem Metallträger des ersten Verstärkungsteils (1a) montiert ist und der Armaturenbrett-Querträger an dem Metallträger des ersten Verstärkungsteils (1a) montiert ist,
- einem zweiten Verstärkungsteil (1b) nach einem der Ansprüche 1 bis 5, wobei ein unteres Scharnier der vorderen Seitentür des Kraftfahrzeugs an dem Metallträger des zweiten Verstärkungsteils (1b) montiert ist,
und die B-Säule (6) mit Folgendem versehen ist:
- einem dritten Verstärkungsteil (1c) nach einem der Ansprüche 1 bis 5, wobei ein oberes Scharnier der hinteren Seitentür des Kraftfahrzeugs an dem Metallträger des dritten Verstärkungsteils (1c) montiert ist,
- einem vierten Verstärkungsteil (1d) nach einem der Ansprüche 1 bis 5, wobei ein unteres Scharnier der hinteren Seitentür des Kraftfahrzeugs an dem Metallträger des vierten Verstärkungsteils (1d) montiert ist.

9. Verfahren zum Zusammenbau eines Abschnitts eines Kraftfahrzeugs, **dadurch gekennzeichnet, dass** es die folgenden Schritte umfasst:
- ein Bereitstellen eines Verstärkungsteils nach einem der Ansprüche 1 bis 5,
- ein Bilden eines Strukturelements des Kraftfahrzeugs, welches das bereitgestellte Verstärkungsteil umfasst, wobei das gebildete Strukturelement eine A-Säule (5) oder B-Säule (6) des Kraftfahrzeugs ist.

10. Verfahren nach dem vorhergehenden Anspruch, **dadurch gekennzeichnet, dass** der Schritt des Bildens des Strukturelements das Bereitstellen einer Karosserieseite (8) und das Bereitstellen einer Karosserieseitenauskleidung (7) umfasst, wobei das Verstärkungsteil (1) zunächst an die Karosserieseitenauskleidung (7) angebracht bereitgestellt wird, dann die Karosserieseite (8) an die Anordnung montiert wird, die durch die Anbringung des Verstärkungsteils (1) an die Karosserieseitenauskleidung (7) gebildet ist.

11. Fertigungsverfahren eines Verstärkungsteils (1) nach einem der Ansprüche 1 bis 5, **dadurch gekennzeichnet, dass** es einen Schritt des Bildens der Zellstruktur (3) in einer Form, einen Schritt des Einsetzens des Metallträgers (2) in die Form vor den Bilden der Zellstruktur (3) oder einen Schritt des Klebens des Metallträgers (2) auf die Zellstruktur (3) nach deren Bilden und Entnehmen aus der Form aufweist.

## Claims

1. Reinforcing part (1) for a motor vehicle comprising a metal support (2), **characterized in that** it comprises a cellular structure (3), in particular a honeycomb structure, formed by a composite material and assembled on the metal support (2), the metal support (2) comprises assembly elements (4a, 4b) for at least one member, the assembly elements (4a, 4b) are configured so as to allow the mounting of a dashboard crossmember of the motor vehicle and/or of a side door hinge of the motor vehicle.

2. Reinforcing part according to Claim 1, **characterized in that** the composite material comprises a resin matrix, in particular a thermoset or thermoplastic resin matrix, and fibres, in particular glass fibres or carbon fibres.

3. Reinforcing part according to Claim 1 or 2, **characterized in that** the cellular structure (3) comprises two sets of cells extending from a common base in opposite directions.

4. Reinforcing part according to one of Claims 1 to 3, **characterized in that** the cellular structure (3) is configured so as to define at least two regions of different rigidity.

5. Reinforcing part according to any one of the preceding claims, **characterized in that** the metal support (2) is configured so as to hug portions of separate faces of the cellular structure (3).

6. Motor vehicle, **characterized in that** it comprises at least one reinforcing part (1) according to one of Claims 1 to 5.

7. Motor vehicle according to the preceding claim, **characterized in that** said at least one reinforcing part (1) is mounted on said motor vehicle so as to form an A-pillar (5) reinforcement or B-pillar (6) reinforcement of the motor vehicle.

8. Motor vehicle according to Claim 6 or 7, **characterized in that** it comprises an A-pillar (5), a B-pillar (6), a front side door articulated on the A-pillar (5), a rear side door articulated on the B-pillar (6) and a dashboard crossmember, said A-pillar being provided:
- with a first reinforcing part (1a) according to one of Claims 1 to 5, an upper hinge of the front side door of the motor vehicle being mounted on the metal support of the first reinforcing part (1a) and the dashboard crossmember being mounted on the metal support of the first reinforcing part (1a),
- with a second reinforcing part (1b) according to one of Claims 1 to 5, a lower hinge of the front side door of the motor vehicle being mounted on the metal support of the second reinforcing part (1b),
and the B-pillar (6) being provided:
- with a third reinforcing part (1c) according to one of Claims 1 to 5, an upper hinge of the rear side door of the motor vehicle being mounted on the metal support of the third reinforcing part (1c),
- with a fourth reinforcing part (1d) according to one of Claims 1 to 5, a lower hinge of the rear side door of the motor vehicle being mounted on the metal support of the fourth reinforcing part (1d).

9. Method for assembling part of a motor vehicle, **characterized in that** it comprises the following steps:
- provision of a reinforcing part according to any one of Claims 1 to 5,
- provision of a structural element of the motor vehicle comprising said provided reinforcing part, said formed structural element being an A-pillar (5) or B-pillar (6) of the motor vehicle.

10. Method according to the preceding claim, **characterized in that** the step of formation of the structural element comprises the provision of a bodyshell side panel (8) and the provision of a bodyshell side panel inner skin (7), said provided reinforcing part (1) being first of all assembled on the bodyshell side panel inner skin (7) and then the bodyshell side panel (8) is mounted on the assembly formed by assembling the reinforcing part (1) on the bodyshell side panel inner skin (7).

11. Method for manufacturing a reinforcing part (1) according to any one of Claims 1 to 5, **characterized in that** it comprises a step of forming the cellular structure (3) in a mould, a step of placing the metal support (2) in the mould before the formation of the cellular structure (3) or a step of adhesively bonding the metal support (2) to the cellular structure (3) after its formation and its removal from the mould.
